# EUROPÄISCHE PATENTSCHRIFT

(11) **EP 0 787 669 B1**
(45) Veröffentlichungstag und Bekanntmachung des Hinweises auf die Patenterteilung: **26.11.2003**
(21) Anmeldenummer: 97101173.9
(22) Anmeldetag: 25.01.1997
(51) Int. Cl.: B65G 43/02

(54) **Fördergurt und Verfahren zur Überwachung eines Fördergurtes**
Conveyor belt and method for monitoring the belt
Bande transporteuse et méthode de surveillance de la bande

(30) Priorität: 01.02.1996 DE 19603578
(43) Veröffentlichungstag der Anmeldung: 06.08.1997
(73) Patentinhaber: ContiTech Transportbandsysteme GmbH, 30165 Hannover (DE)
(72) Erfinder: Alles, Rainer, Dr., 30916 Isernhagen (DE)

(56) Entgegenhaltungen:
- EP-A- 0 716 991
- DATABASE WPI Section PQ, Week 8340 Derwent Publications Ltd., London, GB; Class Q35, AN 83-781207 XP002068210 & SU 977 320 A (DNEPR MINE AUTOMAT)

## Beschreibung

Die Erfindung betrifft einen endlos umlaufenden, vorwiegend aus Gummi bestehenden Gurt, Riemen etc. gemäß dem Oberbegriff des Anspruchs 1. Ein derartiger Gurt ist z.B. aus der SU 977 320 A bekannt. Die Erfindung betrifft ferner ein Verfahren zur Überwachung des Fördergurtes.

Fördergurte werden in Gurtförderanlagen eingesetzt und sind häufig mehrere hundert Meter lang. Im täglichen Gebrauch können Fördergurte hohen mechanischen Belastungen ausgesetzt sein, insbesondere hohen Zugkräften. Aus diesem Grunde werden in hochbelastete Fördergurte Zugträger eingebracht, die beispielsweise aus hochfesten Stahlseilen bestehen können, die in einem Spezialgummi eingebettet sind. Es ist ebenfalls bekannt, die Zugträger in Form von übereinandergeschichteten Textileinlagen auszubilden. Durch die Zugträger wird die mechanische Belastbarkeit der Fördergurte bedeutend gesteigert, jedoch kann nicht ausgeschlossen werden, daß es durch zu hohe Belastungen zu Schädigungen im Fördergurt kommt. Insbesondere bleibt der Verbindungsbereich, in dem die Fördergurtenden miteinander verbunden werden, eine Schwachstelle. Es sind bereits verschiedene Verbindungsarten von Fördergurtenden bekannt, die alle zum Ziel haben, die mechanische Belastbarkeit des Verbindungsbereiches gegenüber Zugbeanspruchungen zu erhöhen. Bei Stahlseilfördergurtverbindungen kann dieses beispielsweise dadurch erreicht werden, daß die korrespondierenden Seile beider Gurtenden auf besondere Weise ineinandergeschachtelt werden und somit Kräfte zwischen den nebeneinanderliegenden Seilflächen der korrespondierenden Seile beider Gurtenden über die Haftung der zusammenvulkanisierten Gummiflächen optimal übertragen werden. Diese Verbindungsart wird als einstufige Verbindung bezeichnet. Es sind auch zwei-, drei- und sogar sechsstufige Verbindungen bekannt (siehe z.B. ContiTech; Fördergurte-Montage und Verbindungen; Continental Gummiwerke AG; in zweiter Auflage 1986). Bei Fördergurten mit Textileinlagen erfolgt die Verbindung in den meisten Fällen durch stufenweises Absetzen und Voreinanderlegen der korrespondierenden Textileinlagen beider Gurtenden.

Trotz der genannten Vorkehrungen sind Schädigungen von Gurten durch eine Überbelastung nie ganz auszuschließen. Insbesondere sind Gurte ohne Festigkeitsträger und der Verbindungsbereich von Gurten mit Festigkeitsträgern gefährdet. Aus diesem Grunde ist bereits vorgeschlagen worden, Fördergurte und insbesondere deren Verbindungsberiche regelmäßig auf Lösungserscheinungen zu überprüfen. Dies kann beispielsweise durch Inaugenscheinnahme mit manueller Aufschreibung der Schäden vor Ort durch qualifizierte Mitarbeiter geschehen. Zusätzlich können Längenveränderungen der Gurte bzw. der Verbindungsbereiche gemessen und kritische Längenveränderungen registriert werden. Abhängig von dem Schadensumfang bzw. von der Längenveränderung wird der Gurt für das Weiterbetreiben der Anlage vor Ort instandgesetzt oder aber ausgewechselt.

Die erläuterten Überwachungsverfahren sind aus unterschiedlichen Gründen unzulänglich. So sind Längenveränderungen, die von Zeit zu Zeit in unregelmäßigen Abständen registriert werden, ein unsicheres Kriterium für Schäden, da hierfür die Belastung genau eingestellt bzw. kontrolliert werden muß. Längenveränderungen können sich ferner in einem Bereich bewegen, der zunächst nicht kritisch ist, dann aber spontan größer werden, so daß der richtige Moment für eine Begutachtung schwierig zu erfassen ist. Ferner steht für eine "optische Inspektion" durch qualifizierte Mitarbeiter aus betrieblichen Gründen nur eine begrenzte Zeit zur Verfügung. Darüber hinaus ist eine derartige Inspektion subjektiv und ihre Qualität ist von der Erfahrung des Mitarbeiters abhängig. Aufgrund der subjektiven Beurteilung des Schadensumfangs durch einen Mitarbeiter kann es dazu kommen, daß der Fördergurt stillgelegt und instand gesetzt wird, obwohl dies an sich noch nicht nötig wäre. Dies hat einen betriebswirtschaftlichen Schaden zur Folge. Umgekehrt kann es dazu kommen, daß kritische Veränderungen im Gurt bzw. im Verbindungsbereich nicht erkannt werden und es zum "schlimmsten Fall", nämlich zum Gurtriss kommt.

Der Erfindung liegt die Aufgabe zugrunde, einen Fördergurt vorzustellen, der zuverlässig überwacht werden kann. Der Erfindung liegt ferner die Aufgabe zugrunde, ein entsprechendes Verfahren zur Überwachung des Fördergurtesvorzustellen.

Die Aufgabe wird durch die kennzeichnenden Merkmale des Sachanspruchs 1 bzw. des nebengeordneten Verfahrensanspruchs 12 gelöst.

Der Grundgedanke der Erfindung ist darin zu sehen, daß in dem Fördergurt mindestens ein Transponder angeordnet wird, der so aufgebaut ist, daß er unterhalb vorgegebener Veränderungen ein Signal an eine ortsfeste, außerhalb des Gurtes angeordnete Sende- und Empfangseinrichtung aussendet und bei Erreichen der vorgegebenen Veränderungen im Fördergurt mechanisch zerstört wird und somit zur Aussendung eines Signals an die Sende- und Empfangseinrichtung nicht mehr in der Lage ist. Bei den genannten Veränderungen kann es sich beispielsweise um eine kritische Verformung des Materials oder um eine Schädigung des den Transponder umgebenden Werkstoffs handeln.

Die mit der Erfindung erzielten Vorteile sind darin zu sehen, daß durch den Einsatz der Transponder Schäden in den Gurten bzw. in den Verbindungsbereichen objektiv und sicher erkannt werden, da die kritischen Veränderungen vor der Serienfertigung von Gurten experimentell erfaßt werden können und die Transponder entsprechend "eichbar" sind. Einer Ausfallzeit des Gurtes durch "Fehlmeldungen" und einem Gurtriss ist also zuverlässig vorgebeugt. Insbesondere ist eine Früherkennung von Schäden, die im Gurtinnern liegen und somit optisch nicht erfassbar sind, möglich. Ein weiterer Vorteil der Erfindung ist darin zu sehen, daß über die Einstellung der "Transponderempfindlichkeit" verschiedene Sicherheitsstufen in der Überwachung eingeführt werden können. So können relativ unempfindliche Transponder eingesetzt werden, die erst bei einer Schädigung des den Transponder umgebenden Werkstoffes mechanisch zerstört werden. Alternativ ist es möglich, empfindliche Transponder in den Gurt bzw. den Verbindungsbereich einzubetten, die bereits bei einer kritischen Verformung des den Transponder umgebenden Werkstoffs mechanisch zerstört werden. Schließlich ist es möglich, hochempfindliche Transponder in den Gurt bzw. den Verbindungsbereich einzubringen, die bereits bei relativ unkritischen Kräften mechanisch zerstört werden und somit einen "Überlastungsschutz"darstellen. Ein weiterer Vorteil der Erfindung ist schließlich darin zu sehen, daß die Gurte bzw. Verbindungsbereiche kontinuierlich überwacht werden können, wenn außerhalb des Fördergurtes mehrere externe Sende- und Empfangseinrichtungen angeordnet sind. In diesem Fall können kritische Veränderungen sofort erkannt und geeignete Maßnahmen sofort eingeleitet werden.

Gemäß einer Weiterbildung der Erfindung nach Anspruch 2 können in den Gurt mehrere Transponder eingebettet werden, die in ihrem funktionstüchtigen Zustand eine individuelle Erkennung an die außerhalb des Fördergurtes befindliche, ortsfeste Sende- und Empfangseinrichtung aussenden. Es ist dann möglich, an jedem gewünschten Punkt des Gurtes, z.B. in regelmäßigen Abständen, einen Transponder anzuordnen und einer Veränderung im Gurt bei Ausfall des Transponders genau zu lokalisieren. Ein weiterer Vorteil ist darin zu sehen, daß in den Gurt mehrere Transponder unterschiedlicher Empfindlichkeit eingebracht werden können, die eine Analyse eines Schadensverlaufes ermöglichen.

Gemäß einer Weiterbildung nach Anspruch 3 werden die Transponder über die gesamte Breite des Gurtes versetzt angeordnet, so daß eine ganzflächige Überwachung des Gurtes möglich ist.

Die Ansprüche 4 bis 8 beziehen sich auf Fördergurte mit eingebrachten Zugträgern in Form von Stahlseilen bzw. Textileinlagen. An die Verbindungsbereiche dieser Fördergurte greifen Zugkräfte an, die zu einer Lageveränderung der Zugträger in dem Verbindungsbereich bzw. zu Schubverformungen zwischen den Zugträgern führen. Sowohl die Lageveränderung als auch die Schubverformungen können mit besonders geeigneten Transpondern detektiert werden, auf die sich die Ansprüche 9 bis 11 beziehen.

Die Ansprüche 12 und 13 beziehen sich auf ein Verfahren zur Überwachung des Verbindungsbereiches des Gurtes, Riemens etc.

Zusammengefaßt ist festzustellen, daß durch die Erfindung Schäden im Verbindungsbereich frühzeitig objektiv und sicher festgestellt werden können, so daß Folgeschäden, die aufwendig in der Reparatur sind, insbesondere ein Gurtriss, zuverlässig vermieden werden.

Weitere Vorteile und Ausführungsbeispiele der Erfindung werden im Zusammenhang mit den nachstehenden Figuren erläutert, darin zeigt:
- Figur 1: eine schematisierte Gurtförderanlage,
- Figur 2: Stahlseilfördergurtverbindungen mit eingelegten Transpondern in der Aufsicht,
- Figur 3: eine Textileinlagenfördergurtverbindung mit eingelegten Transpondern,
- Figur 4: eine Textileinlagenfördergurtverbindung mit eingelegten Transpondern,
- Figur 5: einen Transponder zur begrenzten Aufnahme von Längsverformungen,
- Figur 6: einen Transponder zur begrenzten Aufnahme von Längsverformungen,
- Figur 7: einen Transponder zur begrenzten Aufnahme von Schubverformungen,
- Figur 8: einen Transponder zur begrenzten Aufnahme von Schubverformungen.

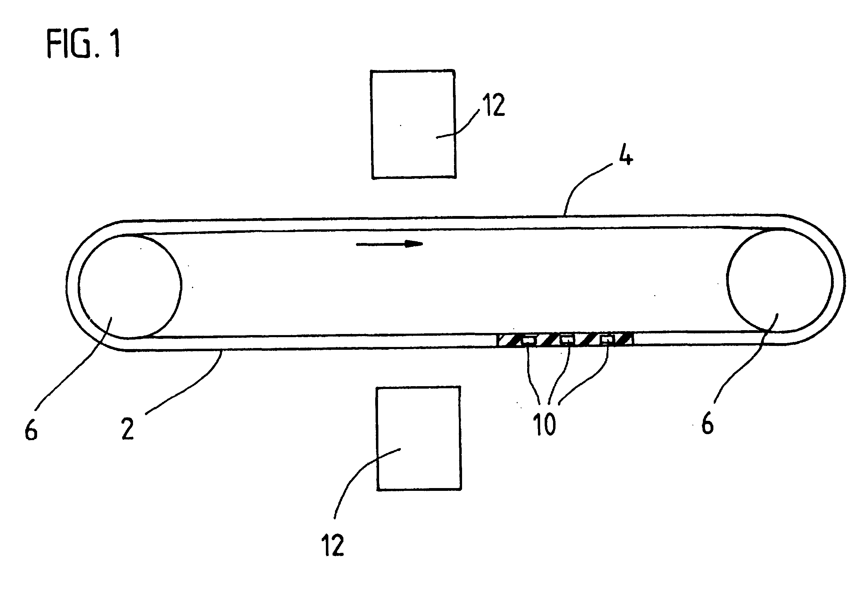

Figur 1 zeigt in schematischer Darstellung eine Gurtförderanlage 2 mit einem Fördergurt 4, der über Trommeln 6 endlos umläuft. Der Fördergurt 4 ist hohen mechanischen Belastungen ausgesetzt und wird aus diesem Grunde einer besonderen Überwachung unterzogen. Dazu ist in den Fördergurt 4 mindestens ein Transponder 10 eingelegt, der derartig ist, daß er sich unterhalb einer kritischen vorgegebenen Veränderung in einem funktionstüchtigen Zustand befindet und bei Erreichen der kritischen vorgegebenen Veränderung in einen zweiten funktionsuntüchtigen Zustand übergeht.

Befindet sich der Transponder 10 in einem funktionstüchtigen Zustand, so übermittelt er beim Vorüberlaufen an einer externen ortsfesten Sende-/Empfangseinrichtung 12 über eine induktive Kopplung eine Kennung an diese. Die Kennung wird von der Sende-/Empfangseinrichtung 12 empfangen und als Anzeichen dafür gewertet, daß in dem Verbindungsbereich 8 keine kritische Veränderung vorliegt, so daß keine besonderen Maßnahmen eingeleitet zu werden brauchen. Bleibt die Kennung beim Vorüberlaufen des Transponders 10 an der Sende-/Empfangseinrichtung 12 hingegen aus, so wird dies von der Sende-/Empfangseinrichtung 12 als Anzeichen dafür gewertet, daß in dem Verbindungsbereich 8 eine kritische vorgegebene Veränderung vorliegt.

Abhängig von der kritischen Veränderung, bei der der Transponder 10 in seinen funktionsuntüchtigen Zustand übergeht, werden nunmehr von der Sende-/Empfangseinrichtung 12 geeignete Maßnahmen eingeleitet. Geht der Transponder 10 z.B. bei einer Zerstörung des den Transponder 10 umgebenden Werkstoffs in seinen funktionsuntüchtigen Zustand über, ist der Fördergurt 4 also beschädigt, wird der Fördergurt 4 angehalten, um den Schaden zu beheben. Geht der Transponder 10 hingegen bei einer kritischen vorgegebenen Längenveränderung des Gurtes 4 in seinen funktionsuntüchtigen Zustand über, so wird dies von der Sende-/Empfangseinrichtung 12 gemeldet, so daß entsprechende Steuermaßnahmen, die die Zugbelastung im Verbindungsbereich 8 erniedrigen, eingeleitet werden können. Die Zugbelastung kann beispielsweise durch Reduzierung der Belastung des Bandes gesucht werden.

In den Fördergurt 4 können mehrere Transponder 10 eingebracht werden, die an die Sende-/Empfangseinrichtung 12 eine individuelle Kennung übermitteln. In der Sende-/Empfangseinrichtung 12 sind die einzelnen individuellen Kennungen und die Reihenfolge, in der sie beim Vorüberlaufen des Verbindungsbereiches 8 an der Sende-/Empfangseinrichtung 12 erwartet werden, gespeichert. Beim Vorüberlaufen des Verbindungsbereiches 8 an der Sende-/Empfangseinrichtung 12 wird durch Vergleich in der Sende-/Empfangseinrichtung 12 geprüft, ob die individuellen Kennungen von den Transpondern 10 in der erwarteten Reihenfolge gesendet werden. Tritt eine Abweichung in der erwarteten Reihenfolge ein, so wird dieses von der Sende-/Empfangseinrichtung 12 als Anzeichen dafür gewertet, daß einer der Transponder 10 in seinen funktionsuntüchtigen Zustand übergegangen ist. Es werden dann die oben erläuterten Maßnahmen eingeleitet. Durch die individuelle Kennung der Transponder 10 kann von der Sende-/Empfangseinrichtung 12 genau verifiziert werden, an welcher Stelle der ausgefallene Transponder liegt, so daß z.B. bei einer eventuellen notwendigen Reparatur des Verbindungsbereiches 8 gezielt auf die geschädigte Stelle zugegriffen werden kann.

Durch das Vorsehen mehrerer externer ortsfester Sende-Empfangseinrichtungen 12 ist es möglich, den Fördergurt 4 kontinuierlich zu überwachen, so daß bei einer kritischen vorgegebenen Veränderung praktisch sofort geeignete Maßnahmen eingeleitet werden können.

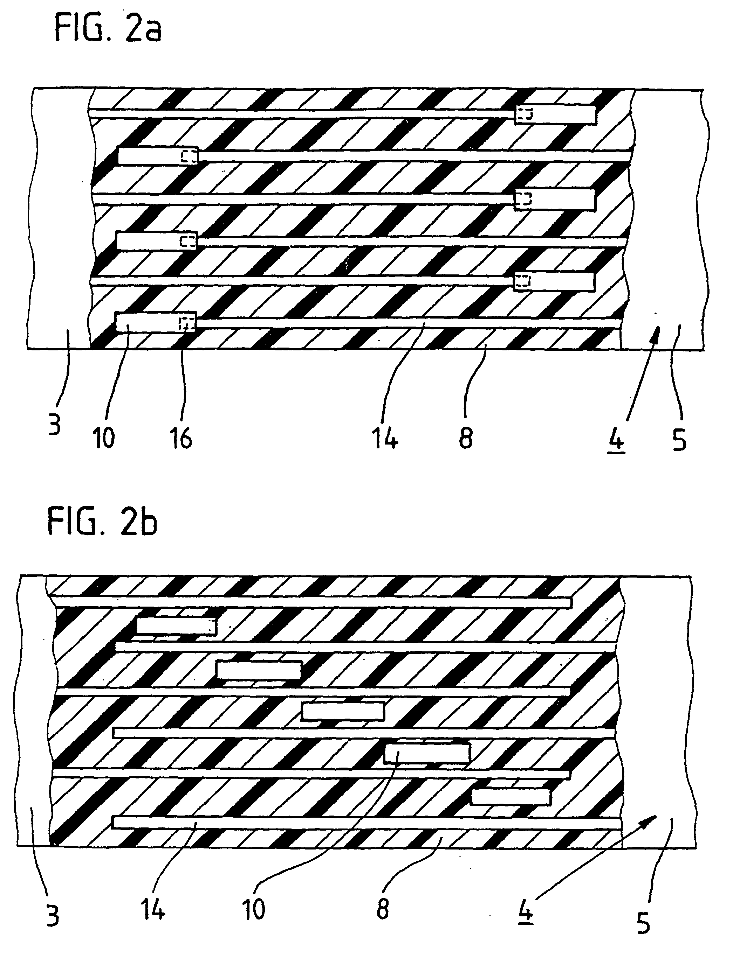

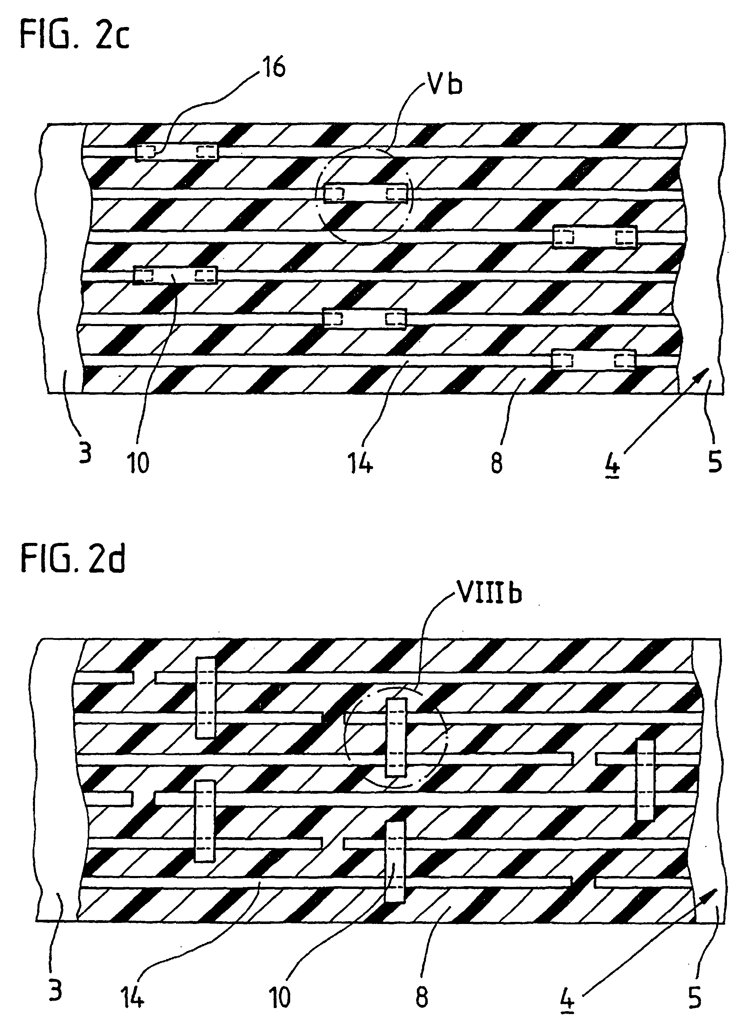

Bei hochbeanspruchten Gurtförderanlagen werden in den Fördergurt Zugträger in Form von Stahlseilen oder Textileinlagen eingebettet. Bei diesen verstärkten Fördergurten ist jedoch der Verbindungsbereich der schwächste Punkt im Fördergurt, der eine spezielle Überwachung notwendig macht. In Verbindung mit Figur 2 wird nunmehr erläutert, wie die Transponder in Stahlseilfördergurtverbindungen bevorzugt eingelegt werden.

Figur 2a zeigt in Aufsicht einen Ausschnitt aus einem Fördergurt 4, bei dem der Verbindungsbereich 8 aufgebrochen ist. In dem Verbindungsbereich 8 laufen die Fördergurtenden 3 und 5 zusammen und werden verbunden, wobei die Enden der Stahlseile 14 ineinandergeschachtelt werden. Über die nebeneinanderliegenden Seilflächen der korrespondierenden Stahlseile 14 werden durch Haftung der zwischen den Stahlseilen 14 liegenden Gummiflächen Kräfte zwischen den Stahlseilen 14 übertragen, so daß der Verbindungsbereich 8 ein bestimmtes Maß an Zugkräften aufnehmen kann. Überschreiten die Zugkräfte jedoch ein kritisches Maß, so können diese Zugkräfte nicht mehr durch die Haftung zwischen den Stahlseilen 14 kompensiert werden, so daß die Stahlseile 14 aus dem Verbindungsbereich 8 "herausgezogen" werden. Dies führt also zu einer Lageveränderung der freien Seilstöße 16 und zu Schubverformungen des Gummis zwischen den Stahlseilen. In dem gezeigten Verbindungsbereich 8 sind im Bereich der Seilstöße 16 Transponder 10 angeordnet, mit denen eine kritische vorgegebene Lageänderung der Seilstöße 16 detektiert werden kann. Dazu sind die Transponder 10 derartig aufgebaut, daß sie bei einer Lageänderung der Seilstöße 16 und die dadurch bedingte Längenänderung des die Seilstöße 16 umgebenden Gummis von dem ersten funktionstüchtigen in den zweiten funktionsuntüchtigen Zustand übergehen.

Figur 2b zeigt einen Fördergurt 4 mit einem Verbindungsbereich 8, in dem die Fördergurtenden 3 und 5 miteinander verbunden sind und der genauso aufgebaut ist wie der in der Figur 2a gezeigte. Die Transponder 10 sind jedoch zwischen den nebeneinanderliegenden Seilflächen der Stahlseile 14 eingebettet und derartig aufgebaut, daß sie bei Erreichen einer kritischen vorgegebenen Schubverformung des Gummis zwischen den Seilflächen von einem ersten funktionstüchtigen Zustand in einen zweiten funktionsuntüchtigen Zustand übergehen und dann ihre individuelle Kennung an eine externe Sende-/Empfangseinrichtung 12 nicht mehr senden können. Vorzugsweise sind, so wie es auch in der Figur 2b gezeigt ist, die Transponder 10 stufenförmig über die gesamte Breite des Fördergurtes 4 verteilt, so daß über die gesamte Breite des Fördergurtes 4 unterschiedliche Zugbelastungen detektiert werden können. Die in der Figur 2b gezeigte Anordnung der Transponder hat den Vorteil, daß im Bereich der Seilenden keine Transponder liegen. Hierdurch wird eine Beeinflussung dieser besonders kritischen Bereiche durch den Einbau der Transponder vermieden.

Figur 2c zeigt einen Ausschnitt aus einem Fördergurt 4 mit einem aufgebrochenen Verbindungsbereich 8, in dem die Fördergurtenden 3 und 5 miteinander verbunden sind. In einer Ebene des Fördergurtes 4 sind so viele Stahlseile 14 nebeneinander angeordnet, daß eine Ineinanderschachtelung der Stahlseilenden im Verbindungsbereich 8 aufgrund des zu geringen Platzangebots nicht möglich ist. In diesem Fall können die Stahlseile 14 auf Länge abgeschnitten und in Stufen (gezeigt sind 2 Stufen) voreinander gelegt werden. Ein derartig aufgebauter Verbindungsbereich 8 ist gegenüber Zugkräften anfälliger als der in der Figur 2a gezeigte Verbindungsbereich 8, da die lang durchgehenden nebeneinanderliegenden Seilflächen korrespondierender Stahlseilenden 14 entfallen. Bei Überschreitung kritischer Zugkräfte an den Stahlseilen 14 kommt es in dem Verbindungsbereich 8 zu einer Entfernung der Seilstöße 16 voneinander bzw. zu einer relativen Bewegung zweier benachbarter Stahlseile 14 in Längsrichtung zueinander. Die Entfernung der Seilstöße 16 voneinander kann durch im Bereich der Seilstöße 16 angeordnete Transponder 10 detektiert werden, wobei sich die Transponder 10 unterhalb einer kritischen Entfernung der Seilstöße 16 voneinander in einem ersten funktionstüchtigen Zustand befinden und in einen zweiten funktionsuntüchtigen Zustand übergehen, wenn sich die Seilstöße 16 über die kritische Entfernung hinaus auseinanderbewegen.

Figur 2d zeigt einen Verbindungsbereich 8 eines Fördergurtes 4, der genau so aufgebaut ist wie der in der Figur 2c gezeigte. Die Transponder 10 sind jedoch derartig angeordnet, daß sie jeweils zwei benachbarte Stahlseile 14 überbrücken und bei einer relativen Verschiebung dieser Stahlseile 14 zueinander und durch die dadurch bedingte Schubverformung des die Stahlseile 14 umgebenden Gummis von dem ersten funktionstüchtigen in den zweiten funktionsuntüchtigen Zustand übergehen. Auch die in der Figur 2d gezeigte Anordnung der Transponder hat den Vorteil, daß im besonders kritischen Bereich der Seilenden keine Transponder liegen.

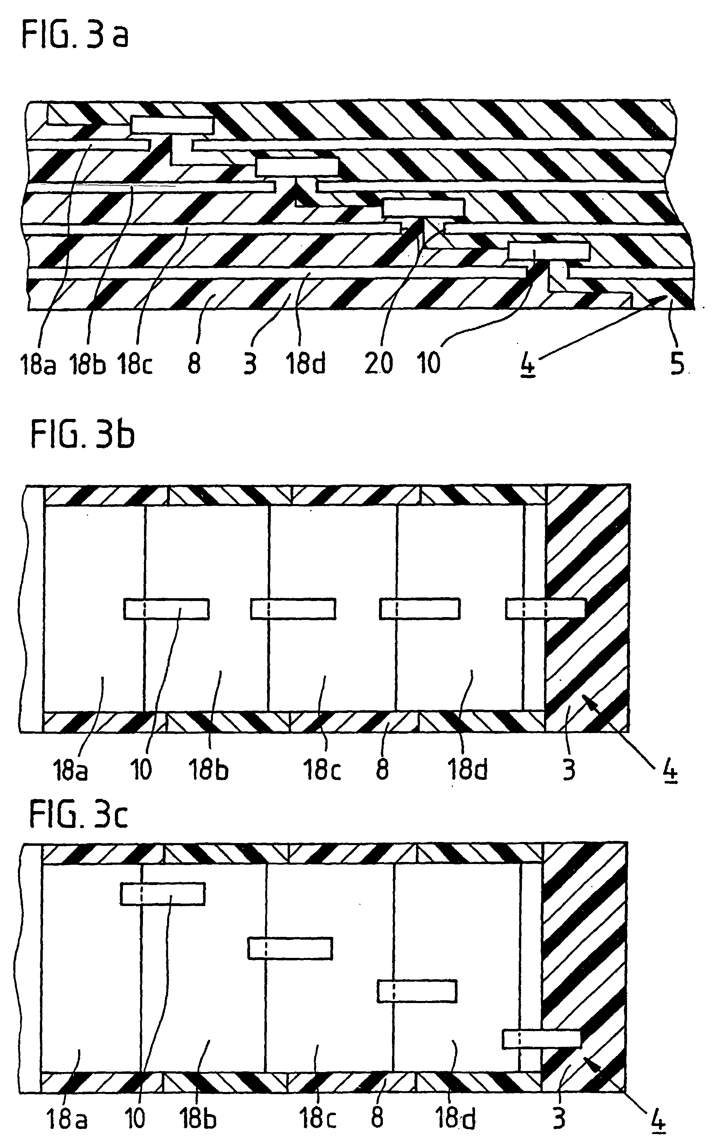

Figur 3 zeigt einen Ausschnitt aus einem Fördergurt 4 mit Textileinlagen 18 im Längsschnitt (Figur 3a) und aufgebrochen in der Aufsicht (Figur 3b, Figur 3c). Die Fördergurtenden 3 und 5 mit den Textileinlagen 18 sind in dem Verbindungsbereich 8 stufenweise abgesetzt und die korrespondierenden Textileinlagenenden 20 sind voreinandergelegt (siehe Figur 3a). Durch das Angreifen von Zugkräften an dem Verbindungsbereich 8 über ein bestimmtes Maß hinaus kommt es zu der Entfernung der Textileinlagenenden 20 voneinander bzw. zu einer relativen Verschiebung der benachbarten übereinanderliegenden Textileinlagen 18 und damit zu einer Schubverformung des dazwischenliegenden Gummis.

Die Entfernung der Textileinlagenenden 20 voneinander kann durch Transponder 10 detektiert werden, die in dem Verbindungsbereich 8 derartig angeordnet sind, daß sie jeweils zwei Textileinlagenenden überbrücken. Bei einer kritischen Entfernung der Textileinlagenenden 20 voneinander und einer dadurch bewirkten Längenänderung des die Textileinlagenenden 20 umgebenden Gummis gehen die Transponder 10 von einem ersten funktionstüchtigen Zustand in einen zweiten funktionsuntüchtigen Zustand über. Die Transponder 10 können in dem Verbindungsbereich 8 entweder in einer Reihe (siehe Figur 3b) oder über die gesamte Breite des Fördergurtes 4 gestuft versetzt voneinander angeordnet sein (siehe Figur 3c).

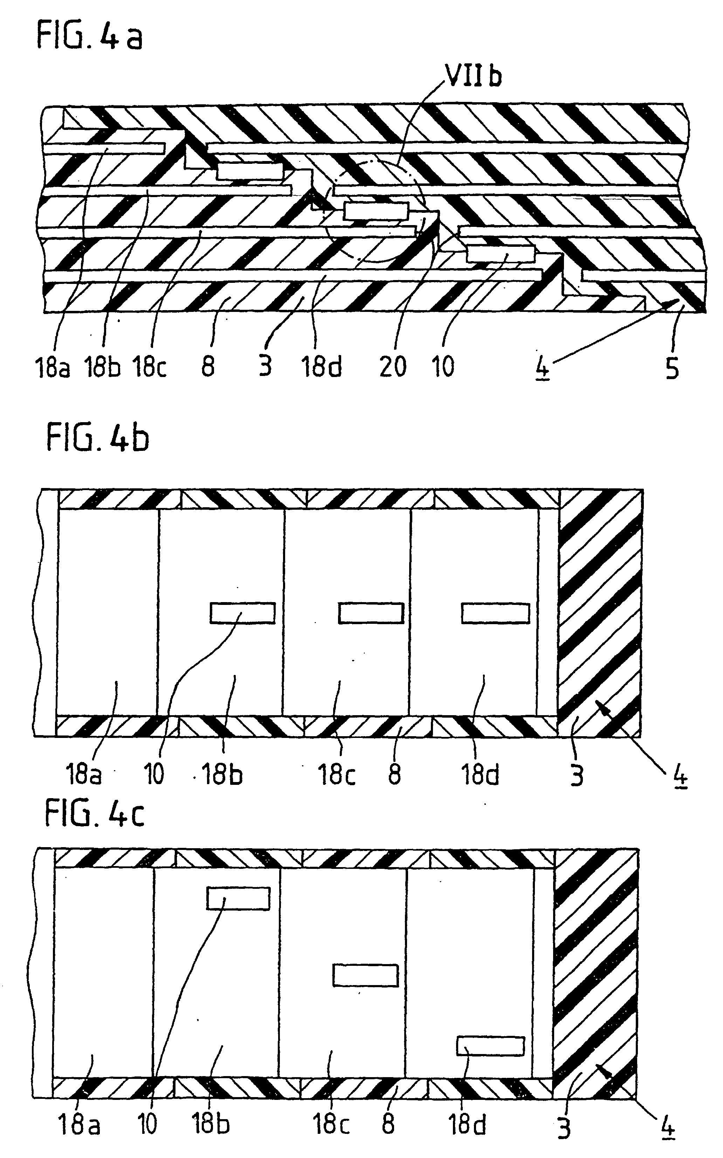

Figur 4 zeigt einen Ausschnitt aus einem Fördergurt 4 mit einem Verbindungsbereich 8, der genau so aufgebaut ist wie in der Figur 3 gezeigte Verbindungsbereich (Figur 4a: Längsschnitt; Figur 4b, 4c: aufgebrochene Aufsicht). Die Transponder 10 sind jedoch zur Anzeige der Schubverformungen in dem Verbindungsbereich zwischen den Textileinlagen 18 und dort insbesondere auf den "Stufenabsätzen" (siehe Figur 4b und Figur 4c) angeordnet. Unterhalb einer kritischen Schubverformung befinden sich die Transponder 10 in einem ersten funktionstüchtigen Zustand und gehen bei Überschreiten einer kritischen vorgegebenen Schubverformung in einen zweiten funktionsuntüchtigen Zustand über. Auch hier können die Transponder 10 in einer Reihe (siehe Figur 4b) oder aber stufenartig versetzt über die gesamte Breite des Fördergurtes 4 angeordnet sein (siehe Figur 4c).

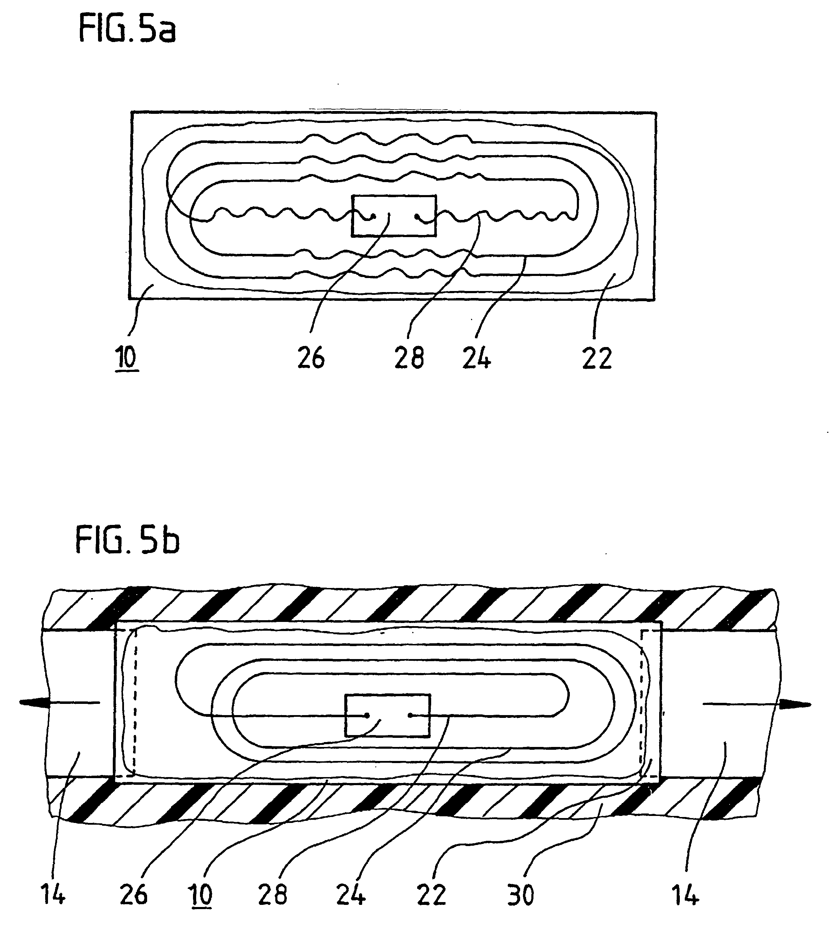

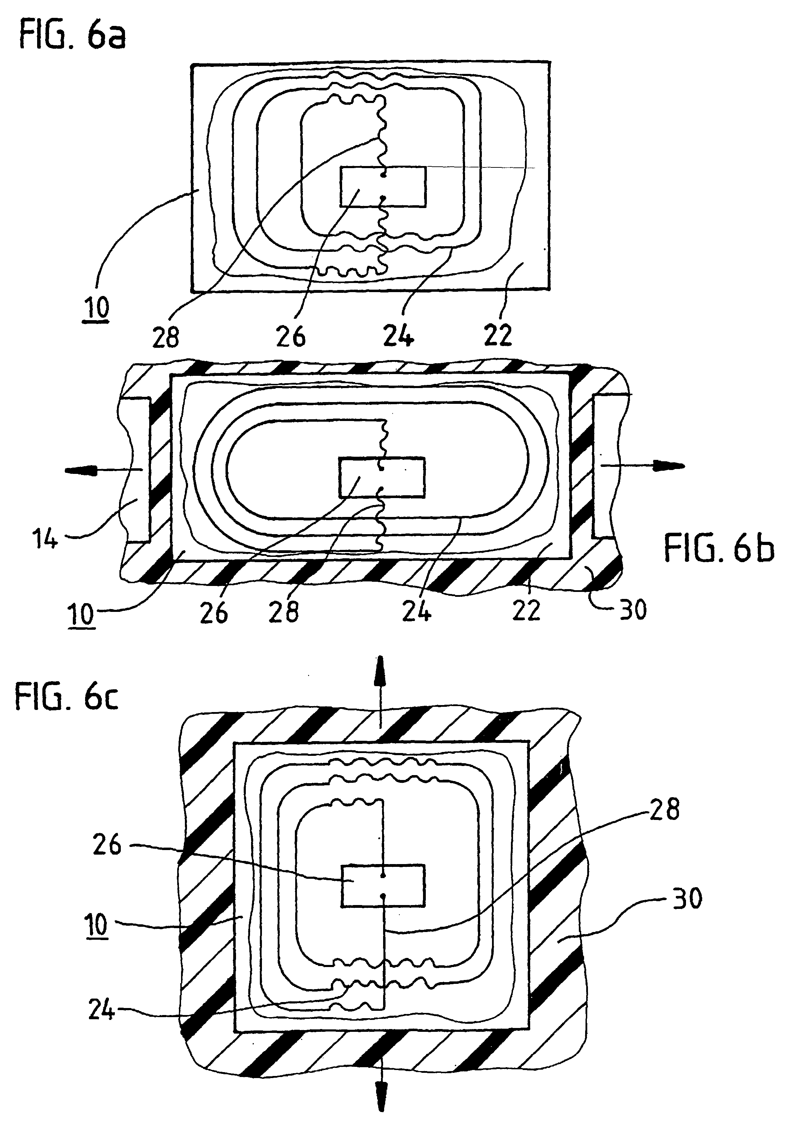

Die Figuren 5 und 6 zeigen jeweils Transponder, die besonders zur Detektion von Längenänderungen geeignet sind, also bevorzugt in Gurte 4, in denen Längenänderungen detektiert werden sollen bzw. in einem Verbindungsbereich 8, wie er in den Figuren 2a, 2c oder 3a gezeigt ist, eingesetzt werden. Der in der Figur 5a gezeigte Transponder besteht aus einem Trägermaterial 22, in dem eine Spule 24 und ein integrierter Schaltkreis 26 angeordnet ist, der mit der Spule 24 leitend verbunden ist. Hierbei sind die leitenden Verbindungen 28 in Längsrichtung des Trägermaterials 22 angeordnet. Sowohl die leitenden Verbindungen 28 als auch die einzelnen Spulenwicklungen der Spule 24 enthalten Bereiche, die bei einer Dehnung des Trägermaterials 22 eine Längenänderung aufnehmen ohne Schaden zu nehmen.In diesen Bereichen können die leitenden Verbindungen 28 und die Spulenwicklungen 24 z.B. "wellenartig" verlegt sein, so wie es auch in der Figur 5a gezeigt ist, oder sie können in diesen Bereichen mit einer "Wendelung" versehen sein.

Figur 5b zeigt vergrößert den in der Figur 2c eingekreisten Ausschnitt. Die an den Stahlseilen 14 angreifenden Kräfte (angedeutet durch die Pfeile) werden durch den in der Fig. 5a gezeigten Transponder 10 detektiert. Unter der Einwirkung der Zugkräfte kommt es zu einer Längenänderung des Gummimaterials 30 und damit zu einer Längenänderung des in dem Gummimaterial 30 eingebetteten Transponders 10. Diese Längenveränderung kann bis zu einem kritischen Maß von den "wellenartig" ausgebildeten Bereichen der leitenden Verbindungen 28 bzw. der einzelnen Spulenwicklungen der Spule 24 aufgenommen werden, bis diese Bereiche "aufgebraucht" sind. Eine weitere Längenänderung des Gummimaterials 30 über das kritische Maß hinaus führt hingegen zu einem Übergang des Transponders in einen funktionsuntüchtigen Zustand, z.B. durch Abreißen der leitenden Verbindungen 28 von dem integrierten Schaltkreis 26. Die obigen Ausführungen machen deutlich, daß durch die Länge der "wellenartigen" Bereiche der leitenden Verbindungen 28 bzw. der Spulenwicklungen der Spule 24 eine kritische Längenänderung exakt vorgegeben und somit die "Transponderempfindlichkeit" eingestellt werden kann.

Figur 6 zeigt einen Transponder, der an sich genau so aufgebaut ist wie der in der Figur 5 gezeigte. Ein Unterschied ist lediglich darin zu sehen, daß der Bereich der leitenden Verbindungen 28, der eine Längenänderung aufnehmen kann, senkrecht auf den Bereichen der Spulenwicklungen der Spule 24, die eine Längenveränderung aufnehmen können, steht. Durch eine derartige Anordnung entsteht ein Transponder 10, mit dem eine Längenänderung in zwei von einander unabhängigen Richtungen detektiert werden kann.

Figur 6b zeigt den in Gummimaterial 30 eingebetteten Transponder 10, wobei das Gummimaterial 30 unter der Wirkung von Zugkräften, die durch Pfeile angedeutet sind, gedehnt wird. Diese Dehnung überträgt sich auf den Transponder 10 und die hervorgerufene Längenänderung wird bis zu einem kritischen Maß von den "wellenartigen" Bereichen der Spulenwicklungen der Spule 24 aufgenommen. Bei einer weiteren Längenveränderung reißen die Spulenwicklungen der Spule 24 und der Transponder 10 wird somit funktionsuntüchtig.

Figur 6c zeigt den in Gummimaterial 30 eingebetteten Transponder 10, wobei an das Gummimaterial 30 nunmehr Kräfte angreifen, die senkrecht zu den in den Figur 6b dargestellten Kräften stehen (wiederum durch Pfeile angedeutet). Die durch die angreifenden Kräfte bewirkte Längenänderung des Transponders 10 wird bis zu einem kritischen Maß von den "wellenartigen" Bereichen der leitenden Verbindungen 28 aufgenommen, bei Überschreitung der kritischen Längenänderungen reißen jedoch die leitenden Verbindungen 28 oder aber ihre Verbindungen zum integrierten Schaltkreis 26 ab.

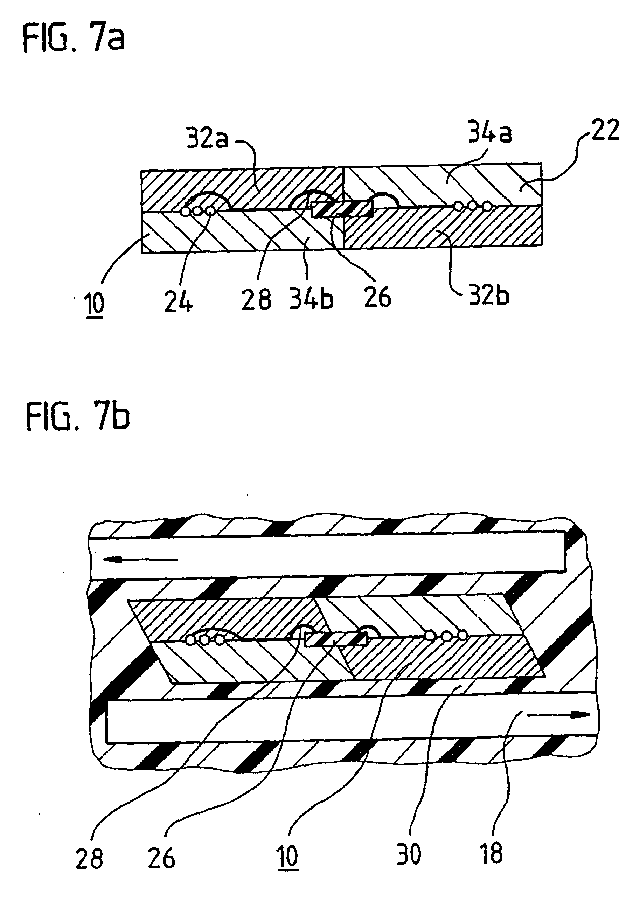

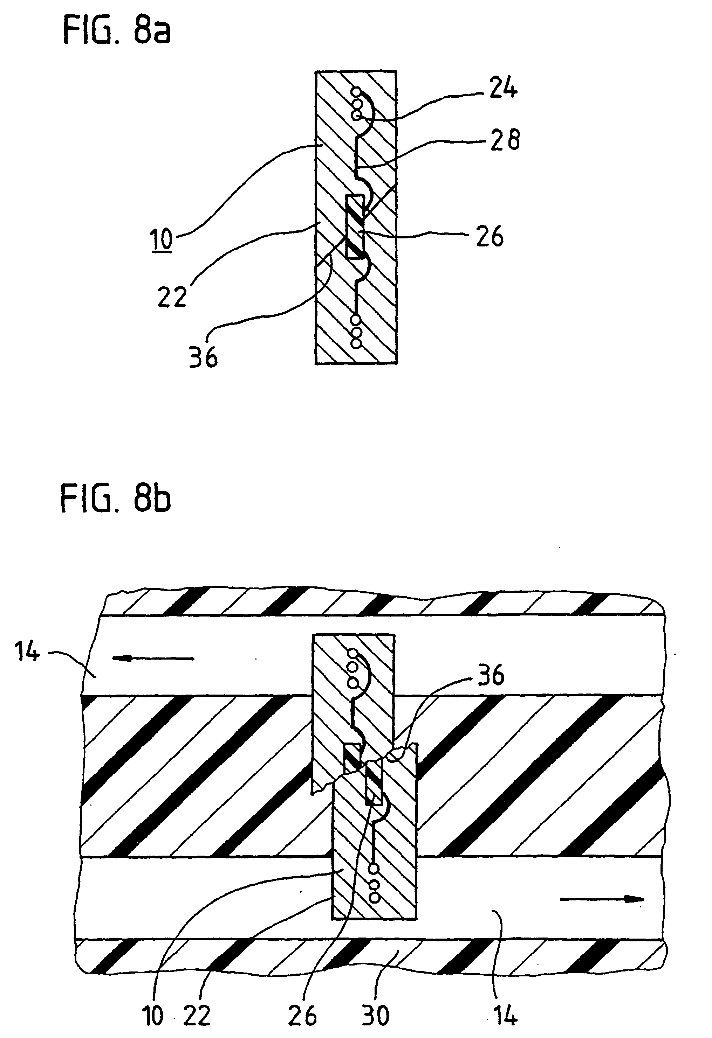

Die Figuren 7 und 8 zeigen Transponder 10 im Querschnitt, mit denen bevorzugt Schubverformungen detektiert werden können, die also bevorzugt in Gurten 4, in den Schubverformungen detektiert werden sollen bzw. in den Verbindungsbereichen, wie sie in den Figuren 2b, 2d und Figur 4a gezeigt sind, eingesetzt werden. Bei dem in der Figur 7a gezeigten Transponder 10 sind die Spule 24, der integrierte Schaltkreis 26 und leitenden Verbindungen 28 von der Spule 24 zu dem integrierten Schaltkreis 26 in einem Trägermaterial 22 eingebettet, das Bereiche unterschiedlicher Haftung aufweist. Insbesondere weisen die Bereiche 32a und 32b eine hohe Haftung zu Gummimaterial und die Bereiche 34a und 34b eine niedrige Haftung zu Gummimaterial auf.

Figur 7b zeigt vergrößert den in der Fig. 4a eingekreisten Ausschnitt. Die an den Textileinlagen 18 angreifenden Kräfte (angedeutet durch Pfeile) werden durch den in der Fig. 7a gezeigten Transponder 10 detektiert. Unter Einwirkung der Kräfte kommt es zu einer Schubverformung im Gummimaterial 30 und infolgedessen zu einer Scherung des Transponders 10, die bis zu einem kritischen Maß die Funktionstüchtigkeit des Transponders 10 nicht beeinträchtigt. Bei Überschreiten einer vorgehenden Schubverformung werden jedoch die leitenden Verbindungen 28 vom integrierten Schaltkreis 26 "abgeschert", so daß es zu einem Funktionsausfall des Transponders 10 kommt.

Figur 8a zeigt einen Transponder 10 mit einem Trägermaterial 22, in dem eine Spule 24 und integrierter Schaltkreis 26 eingebettet ist, der über die leitenden Verbindungen 28 mit der Spule 24 verbunden ist. Das Trägermaterial 22 verfügt über eine Sollbruchstelle 36.

Figur 8b zeigt vergrößert den in der Figur 2d eingekreisten Ausschnitt. Die an den Stahlseilen 14 angreifenden Kräfte (angedeutet durch Pfeile) werden durch den in der Figur 8a gezeigten Transponder detektiert. Unter Einwirkung der Kräfte kommt es zu einer Schubverformung im Gummimaterial 30 und infolgedessen zu einer Scherung des Transponders 10. Bei Überschreiten einer kritischen Schubverformung im Gummimaterial 30 kommt es zu einem Bruch des Trägermaterials 22 entlang der Sollbruchstelle 36. Hierbei werden Bestandteile des Transponders 10 beschädigt, in dem gezeigten Beispiel führt der Bruch entlang der Sollbruchstelle 36 zu einem Bruch des integrierten Schaltkreises 26 und somit zu einem Funktionsausfall des Transponders 10. Bei dem gezeigten Ausführungsbeispiel kann die "Transponderempfindlichkeit" über die Festigkeit der Sollbruchstelle 36 eingestellt werden.

### Bezugszeichenliste

- 2: Gurtförderanlage
- 3: Fördergurtende
- 4: Fördergurt
- 5: Fördergurtende
- 6: Trommeln
- 8: Verbindungsbereich
- 10: Transponder
- 12: ortsfeste Sende-/Empfangseinrichtung
- 14: Stahlseile
- 16: Seilstoß
- 18: Textileinlage
- 20: Textileinlagenenden
- 22: Trägermaterial
- 24: Spule
- 26: integrierter Schaltkreis
- 28: leitende Verbindungen
- 30: Gummimaterial
- 32a, b: Bereich mit hoher Haftung
- 34a, b: Bereich mit geringer Haftung
- 36: Sollbruchstelle

## Patentansprüche

1. Endlos umlaufender vorwiegend aus Gummi bestehender Gurtriemen etc., insbesondere endlos umlaufender Fördergurt (4), dessen Verformungsverhalten bekannt ist, wobei kritische Verformungen, die zu einer Schädigung des Gurtes (4) führen können, vorgegeben sind und wobei in dem Gurt (4) mindestens ein Transponder (10) zur Aussendung eines Signals an eine externe ortsfeste Sende-/Empfangseinrichtung (12) angeordnet ist, wobei der Transponder (10) aus einem integrierten Schaltkreis (26) und einer leitend mit dem integrierten Schaltkreis (26) verbundenen Spule (24) besteht,
**dadurch gekennzeichnet, dass**
der Transponder (10) derartig aufgebaut ist, dass er unterhalb der kritischen Verformung des den Transponder (10) umgebenden Gummis einen ersten funktionstüchtigen Zustand annimmt, in dem der Transponder zur Aussendung eines Signals an die externe ortsfeste Sende-/Empfangseinrichtung (12) im Stande ist und bei Erreichen der kritischen Verformung einen zweiten funktionsuntüchtigen Zustand annimmt, in dem der Transponder (10) nicht zur Aussendung eines Signals im Stande ist.

2. Endlos umlaufender vorwiegend aus Gummi bestehender Gurt, Riemen etc. nach Anspruch 1, **dadurch gekennzeichnet, daß** in dem Gurt (4) mehrere Transponder (10) angeordnet sind, die in dem ersten funktionstüchtigen Zustand eine individuelle Kennung an die externe ortsfeste Sende-/Empfangseinrichtung (12) aussenden.

3. Endlos umlaufender vorwiegend aus Gummi bestehender Gurt, Riemen etc. nach einem der Ansprüche 1 bis 2, **dadurch gekennzeichnet, daß** mehrere Transponder (10) über die gesamte Breite des Gurtes (4) versetzt angeordnet sind.

4. Endlos umlaufender vorwiegend aus Gummi bestehender Gurt, Riemen etc. nach einem der Ansprüche 1 bis 3, **dadurch gekennzeichnet, daß** in Längsrichtung des Fördergurtes (4) Zugträger (14) in Form von Stahlseilen (14) eingebettet sind, deren Enden in einem Verbindungsbereich (8) gestuft nebeneinanderliegen, und daß zwischen dem nebeneinanderliegenden Stahlseilenden (14) mindestens ein Transponder (10) angeordnet ist, der bei Erreichen einer vorgegebenen Schubverformung des Gummis von dem ersten in den zweiten Zustand übergeht.

5. Endlos umlaufender vorwiegend aus Gummi bestehender Gurt, Riemen etc. nach einem der Ansprüche 1 bis 3, **dadurch gekennzeichnet, daß** in Längsrichtung des Fördergurtes (4) Zugträger (14) in Form von in einer Ebene nebeneinanderliegenden Stahlseilen (14) eingebettet sind, deren Enden in einem Verbindungsbereich (8) gestuft nebeneinanderliegen, und daß im Bereich des Seilstoßes (16) eines Stahlseils (14) mindestens ein Transponder (10) angeordnet ist, der bei Erreichen einer vorgegebenen Längenänderung im Bereich des Seilstoßes (16) von dem ersten in den zweiten Zustand übergeht.

6. Endlos umlaufender vorwiegend aus Gummi bestehender Gurt, Riemen etc. nach einem der Ansprüche 1 bis 3, **dadurch gekennzeichnet, daß** in Längsrichtung des Fördergurtes (4) Zugträger (14) in Form von in einer Ebene nebeneinanderliegenden Stahlseilen (14) eingebettet sind, die auf Länge geschnitten und deren Seilstöße (16) voreinandergelegt sind, und daß im Bereich der Seilstöße (16) mindestens ein Transponder angeordnet ist, der bei Erreichen einer vorgegebene Längenänderung im Bereich der Seilstöße (16) von dem ersten in den zweiten Zustand übergeht.

7. Endlos umlaufender vorwiegend aus Gummi bestehender Gurt, Riemen etc. nach einem der Ansprüche 1 bis 3, **dadurch gekennzeichnet, daß** in Längsrichtung des Fördergurtes (4) Zugträger (18) in Form von übereinanderliegenden Textileinlagen (18) eingebettet sind, die in einem Verbindungsbereich (8) stufenweise abgesetzt sind und deren zugehörige Enden im Verbindungsbereich (8) voreinandergelegt sind und daß in dem Bereich, in dem die zugehörigen Textileinlagenenden voreinanderliegen, mindestens ein Transponder (10) angeordnet ist, der bei Erreichen einer vorgegebene Längenänderung im Bereich der Textileinlagenenden von dem ersten in den zweiten Zustand übergeht.

8. Endlos umlaufender vorwiegend aus Gummi bestehender Gurt, Riemen etc. nach einem der Ansprüche 1 bis 3, **dadurch gekennzeichnet, daß** in Längsrichtung des Fördergurtes Zugträger (18) in Form von übereinanderliegenden Textileinlagen (18) eingebettet sind, die in einem Verbindungsbereich (8) stufenweise abgesetzt sind und deren zugehörige Enden (20) in einem im Verbindungsbereich (8) voreinandergelegt sind und daß zwischen benachbarten übereinanderliegenden Textileinlagen (18) mindestens ein Transponder angeordnet ist, der bei Erreichen einer vorgegebenen Schubverformung im Bereich der Textileinlagen (18) von dem ersten in den zweiten Zustand übergeht.

9. Endlos umlaufender vorwiegend aus Gummi bestehender Gurt, Riemen etc. nach einem der Ansprüche 1 bis 8, **dadurch gekennzeichnet, daß** der Transponder (10) in einem Trägermaterial (22) eingebettet ist, der Bereiche mit unterschiedlicher Haftung zu dem umliegenden Gummimaterial (30) aufweist und derart in den Fördergurt (4) eingebettet ist, daß er bei Überschreiten einer vorgegebenen Schubverformung so geschert wird, daß mindestens eine der leitenden Verbindungen (28) von dem integrierten Schaltkreis (26) zu der Spule (24) durchtrennt wird.

10. Endlos umlaufende vorwiegend aus Gummi bestehender Gurt, Riemen etc. nach einem der Ansprüche 1 bis 8, **dadurch gekennzeichnet, daß** der Transponder (10) in einem Trägermaterial (22) eingebettet ist, das über eine Sollbruchstelle (36) verfügt, an der das Trägermaterial (22) bei Erreichen der vorgegebenen Veränderung zerbricht und somit der eingebettete Transponder (10) zerstört wird.

11. Endlos umlaufender vorwiegend aus Gummi bestehender Gurt, Riemen etc. nach einem der Ansprüche 1 bis 6, **dadurch gekennzeichnet, daß** die leitenden Verbindungen (28) von der Spule (24) des Transponders(10) zum integrierten Schaltkreis (26) des Transponders (10) einen Bereich aufweisen, der der Aufnahme von Längenänderungen dient und bei Erreichen einer vorgegebenen kritischen Längenänderung aufgebraucht ist, so daß die leitenden Verbindindungen (28) von dem integrierten Schaltkreis (26) abgerissen werden.

12. Verfahren zur Überwachung eines endlos umlaufenden Fördergurtes (4) gemäß Anspruch 1, wobei das Verformungsverhalten des Gurtes (4) bekannt ist und kritische Veränderungen, die zu einer Schädigung des Gurtes führen können, vorgegeben sind, **dadurch gekennzeichnet, dass**
- im Gurt (4) mindestens ein Transponder (10) angeordnet ist, der sich unterhalb einer kritischen Verformung des den Transponder (10) umgebenden Gummis in einem ersten funktionstüchtigen Zustand befindet
- der in diesem ersten funktionstüchtigen Zustand befindliche Transponder (10) an eine außerhalb des Fördergurtes (4) befindliche ortsfeste Sende-/Empfangseinrichtung (12) ein Signal aussendet
- der Transponder (10) bei Erreichen einer kritischen Verformung des den Transponder (10) umgebenden Gummis in einen zweiten funktionstüchtigen Zustand übergeht
- der in diesem zweiten funktionstüchtigen Zustand befindliche Transponder (10) an die außerhalb des Fördergurtes (4) befindliche ortsfeste Sende-/Empfangseinrichtung (12) kein Signal aussendet
- und dass das Ausbleiben des Signals von der außerhalb des Fördergurtes (4) befindlichen ortsfesten Sende-/Empfangseinrichtung (12) als Anzeichen dafür gewertet wird, dass in dem Fördergurt (4) eine kritische Veränderung erreicht ist und geeignete Maßnahmen eingeleitet werden.

13. Verfahren zur Überwachung eines Verbindungsbereiches (8) nach Anspruch 12, **dadurch gekennzeichnet, daß** in dem Gurt (4) mehrere Transponder (10) angeordnet sind, die
- in ihrem ersten Zustand eine individuelle Kennung an die Sende-/Empfangseinrichtung (12) senden
- in ihrem zweiten Zustand keine Kennung an die Sende-/Empfangseinrichtung (12) senden, wobei
- das Ausbleiben der individuellen Kennung von der Sende-/Empfangseinrichtung (12) als Anzeichen dafür gewertet wird, daß in dem Bereich des Transponders, der keine Kennung gesendet hat, eine kritische Veränderung aufgetreten ist und geeignete Maßnahmen eingeleitet werden.

## Claims

1. Continuously circulating belt etc. formed predominantly from rubber, more particularly a continuously circulating conveyor belt (4), the deformation behaviour of which is known, critical deformations which can lead to damage of the belt (4) being predetermined and at least one transponder (10) being disposed in the belt (4) to transmit a signal to an external stationary transceiver (12), said transponder (10) comprising an integrated circuit (26) and a coil (24) connected in a conductive manner to the integrated circuit (26),
**characterised in that**
the transponder (10) is constructed in such a way that it assumes a first operational state below the critical deformation of the rubber surrounding the transponder (10), in which state the transponder is capable of transmitting a signal to the external stationary transceiver (12), and on reaching the critical deformation assumes a second non-operational state in which the transponder (10) is not capable of transmitting a signal.

2. Continuously circulating, predominantly rubber belt etc. according to claim 1, **characterised in that** a plurality of transponders (10) are disposed in the belt (4) which in the first operational state transmit an individual identification signal to the external stationary transceiver (12).

3. Continuously circulating, predominantly rubber belt etc. according to one of claims 1 to 2, **characterised in that** a plurality of transponders (10) are disposed offset over the entire width of the belt (4).

4. Continuously circulating, predominantly rubber belt etc. according to one of claims 1 to 3, **characterised in that** strengtheners (14) in the form of steel cords (14) are embedded in the longitudinal direction of the conveyor belt (4), the ends of which cords lie stepped beside one another in a connection region (8), and **in that** between the adjacent steel cord ends (14) is disposed at least one transponder (10) which passes from the first state into the second state when a predetermined shear deformation of the rubber is reached.

5. Continuously circulating, predominantly rubber belt etc. according to one of claims 1 to 3, **characterised in that** strengtheners (14) in the form of steel cords (14) lying beside one another in one plane are embedded in the longitudinal direction of the conveyor belt (4), the ends of which cords lie stepped beside one another in a connection region (8), and **in that** in the region of the joint (16) of a steel cord (14) is disposed at least one transponder (10) which passes from the first state into the second state when a predetermined length alteration is reached in the region of the cord joint (16).

6. Endlessly circulating, predominantly rubber belt etc. according to one of claims 1 to 3, **characterised in that** strengtheners (14) in the form of steel cords (14) lying beside one another in one plane are embedded in the longitudinal direction of the conveyor belt (4), which are cut to length and the cord joints (16) of which are placed in front of one another, and **in that** in the region of the cord joints (16) is disposed at least one transponder, which passes from the first state into the second state when a predetermined length alteration is reached in the region of the cord joints (16).

7. Continuously circulating, predominantly rubber belt etc. according to one of claims 1 to 3, **characterised in that** strengtheners (18) in the form of superimposed textile inserts (18) are embedded in the longitudinal direction of the conveyor belt (4), which inserts are placed in steps in a connection region (8), and the associated ends of which inserts are placed in front of one another in the connection region (8), and **in that** in the region in which the associated textile insert ends lie in front of one another is disposed at least one transponder (10), which passes from the first state into the second state when a predetermined length alteration is reached in the region of the textile insert ends.

8. Continuously circulating, predominantly rubber belt etc. according to one of claims 1 to 3, **characterised in that** that strengtheners (18) in the form of superimposed textile inserts (18) are embedded in the longitudinal direction of the conveyor belt (4), which inserts are placed in steps in a connection region (8) and the associated ends (20) of which are placed in front of one another in the connection region (8), and **in that** between adjacent superimposed textile inserts (18) is disposed at least one transponder, which passes from the first state into the second state when a predetermined shear deformation is reached in the region of the textile inserts (18).

9. Continuously circulating, predominantly rubber belt etc. according to one of claims 1 to 8, **characterised in that** the transponder (10) is embedded in a supporting material (22) which has regions with differing adhesion to the surrounding rubber material (30) and is embedded in the conveyor belt (4) in such a way that, when a predetermined shear deformation is exceeded, it is so sheared that at least one of the conductive connections (28) from the integrated circuit (26) to the coil (24) is severed.

10. Continuously circulating, predominantly rubber belt etc. according to one of claims 1 to 8, **characterised in that** the transponder (10) is embedded in a supporting material (22), which has a predetermined breaking point (36) at which the supporting material (22) breaks when the predetermined alteration is reached and thus the embedded transponder (10) is destroyed.

11. Continuously circulating, predominantly rubber belt etc. according to one of claims 1 to 6, **characterised in that** the conductive connections (28) from the coil (24) of the transponder (10) to the integrated circuit (26) of the transponder (10) have a region which serves to accommodate length alterations and is used up when a predetermined critical length alteration is reached, such that the conductive connections (28) are torn away from the integrated circuit (26).

12. Method of monitoring a continuously circulating conveyor belt (4) according to claim 1, wherein the deformation of the belt (4) is known, and critical alterations which can lead to damage of the belt are predetermined, **characterised in that**
- in the belt (4) is disposed at least one transponder (10) which is in a first operational state below a critical deformation of the rubber surrounding the transponder (10),
- the transponder (10) which is in this first operational state transmits a signal to a stationary transceiver (12) located outside the conveyor belt (4),
- when a critical deformation of the rubber surrounding the transponder (10) is reached, the transponder (10) passes into a second operational state,
- the transponder (10) which is in this second operational state does not transmit any signal to the stationary transceiver (12) located outside the conveyor belt (4),
- and **in that** the absence of the signal from the stationary transceiver (12) located outside the conveyor belt (4) is taken as an indication that a critical alteration has been reached in the conveyor belt (4) and suitable measures are initiated.

13. Method for monitoring a connection region (8) according to claim 12, **characterised in that** in the belt (4) are disposed a plurality of transponders (10) which
- in their first state send an individual identification signal to the transceiver (12),
- in their second state do not send any identification signal to the transceiver (12),
- the absence of the individual identification signal from the transceiver (12) being taken as an indication that a critical alteration has occurred in the region of the transponder which has not transmitted any identification signal, and suitable measures are initiated.

## Revendications

1. Courroies tournantes sans fin, principalement composées de caoutchouc etc., notamment courroie de convoyeur tournante sans fin (4), dont le comportement à la déformation est connu, des modifications critiques pouvant endommager la courroie (4) étant prédéfinies,
**caractérisées en ce qu'**au moins un transpondeur (10), constitué d'un circuit de commutation intégré (26) et d'une bobine (24) reliée de manière conductrice au circuit de commutation intégré (26), est disposé dans la courroie (4), lequel est conçu de telle sorte qu'il accepte un premier état de fonctionnement en dessous de la modification critique, dans lequel le transpondeur est en mesure d'envoyer un signal à un dispositif d'émission-réception (12) fixe externe, et qu'il accepte un deuxième état de fonctionnement lorsque la modification critique est atteinte, dans lequel état le transpondeur (10) n'est pas en mesure d'envoyer un signal à un dispositif d'émission-réception (12) fixe externe.

2. Courroies tournantes sans fin, principalement composées de caoutchouc etc., selon la revendication 1, **caractérisées en ce que** plusieurs transpondeurs (10) sont disposés dans la courroie (4), et envoient une identification individuelle au dispositif d'émission-réception (12) fixe externe dans un premier état de fonctionnement.

3. Courroies tournantes sans fin, principalement composées de caoutchouc etc., selon l'une quelconque des revendications 1 à 2, **caractérisées en ce que** plusieurs transpondeurs (10) sont disposés en décalage sur toute la largeur de la courroie (4).

4. Courroies tournantes sans fin, principalement composées de caoutchouc etc., selon l' une quelconque des revendications 1 à 3, **caractérisées en ce que** des tirants (14) en forme de câbles d'acier (14) sont insérés dans le sens longitudinal de la courroie de convoyeur (4), tirant dont les extrémités sont disposées en étages les unes à côté des autres dans une zone de connexion (8), et **en ce qu'**au moins un transpondeur (10), qui passe du premier au deuxième état lorsque la déformation prédéfinie du caoutchouc due à la poussée est atteinte, est disposé entre les extrémités des câbles d'acier (14) disposées les unes à côté des autres.

5. Courroies tournantes sans fin, principalement composées de caoutchouc etc., selon l'une quelconque des revendications 1 à 3, **caractérisées en ce que** des tirants (14) en forme de câbles d'acier (14) situés sur un niveau les uns à côté des autres sont insérés dans le sens longitudinal de la courroie de convoyeur (4), tirants dont les extrémités sont disposées en étages les unes à côté des autres dans une zone de connexion (8), et **en ce qu'**au moins un transpondeur (10) est disposé au niveau du joint du câble (16) d'un câble en acier (14), transpondeur qui passe du premier au deuxième état lorsqu'une modification de longueur prédéfinie dans la zone du joint du câble (16) est atteinte.

6. Courroies tournantes sans fin, principalement composées de caoutchouc etc., selon l'une quelconque des revendications 1 à 3, **caractérisées en ce que** les tirants (14) en forme de câbles d'acier (14) situés sur un niveau les uns à côté des autres sont insérés dans le sens longitudinal de la courroie de convoyeur (4), tirants qui sont coupés dans le sens de la longueur et dont les joints de câble (16) sont disposés les uns devant les autres, et **en ce qu**'au moins un transpondeur est disposé dans la zone du joint de câble (16), qui passe du premier au deuxième état lorsque la modification de longueur prédéfinie dans la zone du joint de câble (16) est atteinte.

7. Courroies tournantes sans fin, principalement composées de caoutchouc etc., selon l'une quelconque des revendications 1 à 3, **caractérisées en ce que** les tirants (18) en forme de plis textiles (18) superposés sont insérés dans le sens longitudinal de la courroie de convoyeur (4), tirants qui sont décalés en étages dans une zone de connexion (8) et dont les extrémités correspondantes sont disposées les unes devant les autres dans une zone de connexion (8), et **en ce qu'**au moins un transpondeur (10) est disposé dans la zone où les extrémités des plis textile correspondantes sont placées les unes devant les autres, transpondeur qui passe du premier au deuxième état lorsque la modification de longueur prédéfinie dans la zone des extrémités des plis textiles est atteinte.

8. Courroies tournantes sans fin, principalement composées de caoutchouc etc., selon l'une quelconque des revendications 1 à 3, **caractérisées en ce que** les tirants (18) en forme de plis textiles (18) superposés sont insérés dans le sens longitudinal de la courroie de convoyeur (4), tirants qui sont décalés en étages dans une zone de connexion (8) et dont les extrémités correspondantes sont disposées les unes devant les autres dans une zone de connexion (8), et **en ce qu**'au moins un transpondeur est disposé entre les plis textiles adjacents superposés, transpondeur qui passe du premier au deuxième état lorsque la déformation du caoutchouc due à la poussée prédéfinie dans la zone des plis textile (18) est atteinte.

9. Courroies tournantes sans fin, principalement composées de caoutchouc etc., selon l'une quelconque des revendications 1 à 8, **caractérisées en ce que** le transpondeur (10) est inséré dans un matériau support (22) qui présente des zones avec une adhérence différente de celle du caoutchouc (30) environnant et qui est inséré dans la courroie de convoyeur (4) de telle sorte qu'il est cisaillé lorsque une déformation du caoutchouc due à la poussée prédéfinie est dépassée, de telle manière qu'au moins l'une des connexions conductrices (28) du circuit de commutation intégré (26) à la bobine (24) est sectionnée.

10. Courroies tournantes sans fin, principalement composées de caoutchouc etc., selon l'une quelconque des revendications 1 à 8, **caractérisées en ce que** le transpondeur (10) est inséré dans un matériau support (22) qui dispose d'un point destiné à la rupture (36) auquel le matériau support (22) se casse lorsque la modification prédéfinie est atteinte, ce qui endommage le transpondeur inséré (10).

11. Courroies tournantes sans fin, principalement composées de caoutchouc etc., selon l'une quelconque des revendications 1 à 6, **caractérisées en ce que** les connexions conductrices (28) présentent une zone, de la bobine (24) du transpondeur (10) au circuit de commutation intégré (26) du transpondeur (10), qui sert à recueillir les modifications de longueur et est épuisée lorsqu'une modification de longueur critique prédéfinie est atteinte, de sorte que les connexions conductrices (28) sont arrachées du circuit de commutation intégré (26) .

12. Procédé de surveillance d'une courroie de convoyeur (4) tournante sans fin, le comportement à la déformation de la courroie étant connu et les modifications critiques pouvant endommager la courroie étant prédéfinies, **caractérisé en ce que**
- au moins un transpondeur (10) se trouvant dans un premier état de fonctionnement en dessous de la modification critique est disposé dans la courroie (4)
- le transpondeur (10) se trouvant dans ce premier état de fonctionnement émet un signal vers un dispositif d'émission-réception (12) fixe se trouvant à l'extérieur de la courroie de convoyeur (4)
- le transpondeur (10) passe dans un deuxième état de fonctionnement lorsque la modification critique est atteinte
- le transpondeur (10) se trouvant dans ce deuxième état de fonctionnement n'émet aucun signal vers le dispositif d'émission-réception (12) fixe se trouvant à l'extérieur de la courroie de convoyeur (4)
- et **en ce que** l'absence de signal du dispositif d'émission-réception (12) fixe se trouvant à l'extérieur de la courroie de convoyeur (4) est considéré comme le signe qu' une modification critique est atteinte dans la courroie de convoyeur (4) et que les mesures adéquates doivent être prises.

13. Procédé de surveillance d'une zone de connexion (8) selon la revendication 12, **caractérisé en ce que** plusieurs transpondeurs (10) sont disposés dans la courroie (4), qui
- lorsqu'ils sont dans leur premier état, envoient une identification individuelle au dispositif d'émission-réception (12)
- lorsqu'ils sont dans leur deuxième état, n'envoient aucune identification au dispositif d'émission-réception (12)
- l'absence d'identification individuelle provenant du dispositif d'émission-réception (12) étant considérée comme le signe que dans la zone du transpondeur, qui n'a envoyé aucune identification, une modification critique s'est produite et que les mesures adéquates doivent être prises.
